# DEMANDE DE BREVET EUROPEEN

(11) **EP 1 308 334 A1**
(43) Date de publication de la demande: **07.05.2003**
(21) Numéro de dépôt: 02368120.8
(22) Date de dépôt: 01.11.2002
(51) Int. Cl.: B60J 11/00

(54) **Parasol pour véhicule**

(30) Priorité: 02.11.2001 FR 0114236
(71) Demandeur: Fortin, Jean-Louis, 06600 Antibes (FR)
(72) Inventeur: Fortin, Jean-Louis, 06600 Antibes (FR)
(74) Mandataire: Schuffenecker, Thierry

(57) **Abrégé**

Parasol avec ses supports de fixation (5) et son armature (1), (1 et 3) ou (4) permettant de maintenir une toile (2) tendue à quelques centimètres au-dessus d'un véhicule. L'invention est un accessoire amovible conçu pour permettre son installation et son démontage aisés et rapides de sorte à assurer la protection temporaire d'un véhicule à l'arrêt lors de son parcage ; Des supports de fixation (5) faisant partie de l'invention sont créés sur le véhicule ; Des liens tendeurs (6) et des liens latéraux (7) permettent d'assurer le maintien du parasol sur celui-ci.

## Description

### Domaine technique

L'invention concerne le domaine des accessoires de véhicule et plus spécialement un parasol pour véhicule, du type comportant une toile, une armature composée d'au moins deux supports amovible destinés à maintenir ladite toile à distance au dessus de la carrosserie dudit véhicule.

### Etat de la technique

De nombreuses solutions ont été proposées afin de protéger un véhicule et son habitacle - par exemple un véhicule automobile - contre les effets calorifiques du soleil.

Actuellement, les principes de parasol à l'exception de ceux utilisés sur des poussettes pour enfant, sont généralement posés ou fixés au sol ou après un mur.

On citera les brevets n° 82 05704, 85 09769, IT5402585, 87 01229 et 91 02398 représentants des dispositifs de protection contre les rayonnements solaires qui utilisent une toile amovible, tendue et intercalée par rapport à la carrosserie d'une automobile de diverses façons ( Enrouleur de toile, piquets d'angle sur parechocs, boudins gonflables ou non ). Ces systèmes n'utilisent pas d'armature composée d'arceaux pour supporter la toile et diffèrent par leur mode de fixation au véhicule.

On connaît aussi les "bâches" utilisées généralement comme parois ou couvertures de protection dans le cas de camions, remorques, etc. Le brevet américain US 5,240,305 décrit une telle bâche et son système d'attache au véhicule, l'ensemble ne permettant cependant pas le maintien d'une toile à quelques centimètres au-dessus du véhicule afin de créer une ombre et de contrer les effets calorifiques du soleil.

Certains véhicules du genre cabriolets, calèches, bateaux, etc... sont dotés d'une "capotes" , laquelle sert de toiture toiture souvent escamotable, pour certains véhicules genre cabriolets, calèches, bateaux, etc.

Ces deux exemples, bâches et capotes, ont pour destination principale de protéger le chargement et les passagers des intempéries lors de l'utilisation du véhicule dont ils font souvent parties intégrantes ;

Le brevet US 5,197,503 décrit un parasol pour un véhicule automobile permettant de créer une ombre au-dessus dudit véhicule et, par conséquent, de limiter l'effet d'étuve à l'intérieur de l'habitacle, mais au prix d'une structure complexe, comportant un grand nombre d'éléments d'assemblage, barres et ventouses.

Il est souhaitable de pouvoir disposer d'une structure de parasol simple à fabriquer, peu onéreuse et surtout rapide à mettre en oeuvre.

### Résumé de l'invention

La présente invention a pour objet un parasol, pour véhicule, du type comportant une toile, une armature composée d'au moins deux supports amovibles destinés à maintenir la dite toile à distance au dessus de la carrosserie dudit véhicule et des points d'attaches permettant de relier ledit parasol audit véhicule. Le parasol est caractérisé en ce que chacun desdits points d'attache comporte des moyens de pincements permettant sa fixation sur ladite carrosserie et au moins un logement destiné à recevoir, par encastrement, l'extrémité d'au moins d'un desdits support amovibles.

Cette invention est un accessoire amovible facilement et rapidement mis en place sur un véhicule lors de son parcage ; Et il est tout aussi facilement et rapidement retiré du véhicule lors de sa remise en service.

Pour arrimer l'invention, des supports de fixation désignés ci-après "points d'attache" sont créés sur le véhicule ; En vue d'un essor commercial, ceux-ci sont conçus pour répondre au plus grand nombre d'adaptations en fonction de la configuration des différents types de véhicules ; Ils sont installés de façon à rester fixés sur le véhicule lors de son utilisation et leur conception ne les rend nuisibles ni au fonctionnement, ni à l'esthétique du véhicule qui en est équipé.

Sur ces points d'attache est fixée l'armature sur laquelle est tendue la toile du parasol ; Cette armature est conçue pour maintenir solidement la toile, quelques centimètres au-dessus de la carrosserie du véhicule, de sorte que la couche d'air s'interposant entre eux crée une isolation thermique ; Et les effets du moindre courant d'air venant chasser les calories de cette couche d'air n'en sont alors que bénéfiques.

Selon un mode de réalisation préféré, lesdits points d'attache sont fixés par pincement sur les éléments de carrosserie de façon à offrir la solidité nécessaire à leur fonction de support du parasol ; Par préférence aussi, leur conception permet la possibilité d'un démontage ultérieur ; Une protection mécanique venant s'intercaler entre ces points d'attache et la carrosserie, favorise la fixation sans détérioration du véhicule.

Selon un autre mode de réalisation, lesdits points d'attache sont fixés sans tenir compte des critères ci-dessus, par perçage, soudage, collage ou autres moyens de fixation connus, ou bien, conçus dés l'origine, font partie intégrante du véhicule.

Selon un mode de réalisation particulier, ladite armature est composée de supports amovibles constitués d'arceaux flexibles de préférence ; Les extrémités de ces arceaux peuvent posséder une ou plusieurs parties fonctionnelles, dont l'une spécifiques au type de conception desdits points d'attache vient s'insérer dans un logement prévu dans ce dernier.

Selon un autre mode de réalisation, ladite armature est composée de supports amovibles constitués d'au moins deux barres rigides de préférence, maintenues surélevées de la carrosserie par des supports intercalaires; Ces supports amovibles, sur ou sous lesquels est tendue la toile, sont simplement posés sur la carrosserie ou fixés différemment au lieu et à la place des barres porte-bagages de certains véhicules.

Selon un mode de réalisation préférentiel, ladite toile est rendue solidaire de l'armature ; Des liens tendeurs permettent de fixer celle-ci au véhicule par l'intermédiaire desdits points d'attache prévus pour accepter cette fonction ;

Selon un autre mode de réalisation, ladite toile est tendue sur ou sous l'armature ; Des liens tendeurs permettent de fixer celle-ci au véhicule, par l'intermédiaire ou non, desdits points d'attache ;

Des liens latéraux complémentaires de type "sangle" de préférence, permettent d'assurer le maintien du parasol en coinçant ces liens dans les portières ou en les accrochant différemment sur le côté du véhicule.

### Description des figures

On donnera maintenant une description de quelques exemples de réalisation en se reportant aux figures annexées dans lesquelles :
Les figures 1 à 3 sont des représentations de parasols conformes à l'invention, déployés au-dessus d'une automobile ;
Les figures 4 à 11 sont des représentations de points d'attache et des représentations d'extrémités d'arceau, en diverses combinaisons et positions, conformément à l'invention.

### Description de modes de réalisation préférés

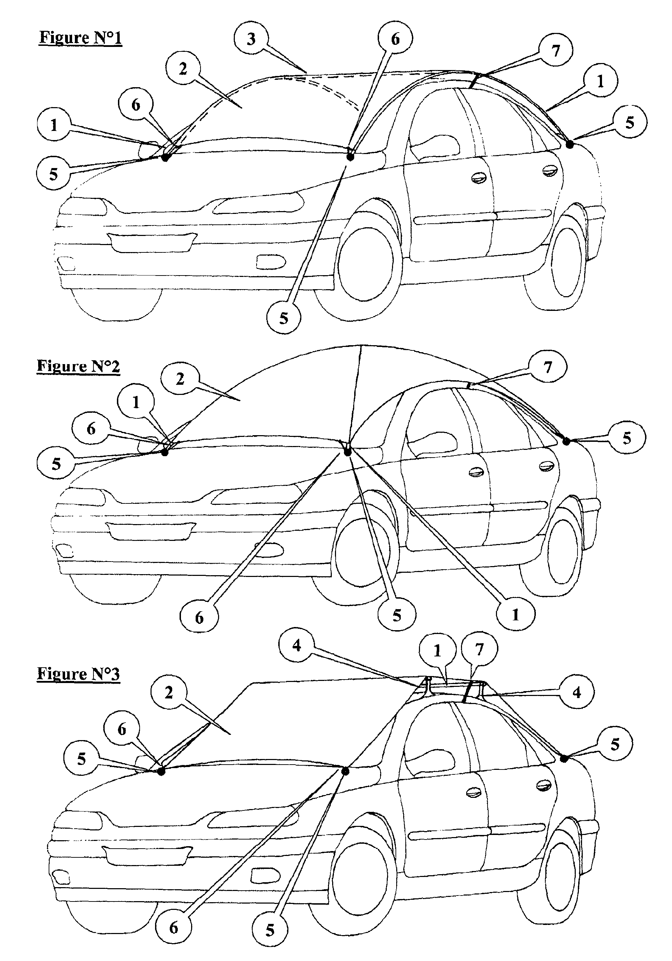

La figure 1 représente un parasol dont l'armature est composée de supports amovibles (1) constitués par deux arceaux flexibles montés sensiblement parallèles à l'axe longitudinal d'une automobile, dont chacune des extrémités vient s'insérer dans un des quatre points d'attache (5) fixé sur la carrosserie ; Une toile (2) de préférence extensible et rendue solidaire de l'armature est tendue entre ces arceaux ; Un troisième arceau transversal (3) peut avantageusement s'intercaler perpendiculairement entre les deux premiers, pour un meilleur maintien de l'ensemble ; Un lien tendeur de toile (6) relie chaque angle de l'ensemble "toile et armature" au véhicule par l'intermédiaire d'un point d'attache (5) fixé sur ce dernier ; Et des liens latéraux (7) coincés dans les portières complètent la fixation du parasol.

La figure 2 représente un parasol dont l'armature est composée de supports amovibles (1) constitués par deux arceaux flexibles montés croisés, dont chacune des extrémités vient s'insérer dans un des quatre points d'attache (5) fixé sur la carrosserie ; Une toile (2) est tendue sur ces arceaux ; Un lien tendeur de toile (6) relie chaque angle de l'ensemble "toile et armature" au véhicule par l'intermédiaire d'un point d'attache (5) fixé sur ce dernier ; Et des liens latéraux (7) coincés dans les portières complètent la fixation du parasol.

La figure 3 représente un parasol dont l'armature est composée de supports amovibles (1) constitués par deux barres rigides de préférence, maintenues surélevées de la carrosserie du véhicule par des supports intercalaires (4) et montés sensiblement parallèles entre eux et sensiblement perpendiculaires à l'axe longitudinal d'une automobile ; Une toile (2) est tendue sur ces supports ; Un lien tendeur de toile (6) relie chaque angle de cette toile au véhicule par l'intermédiaire d'un point d'attache (5) fixé sur ce dernier ; Et des liens latéraux (7) coincés dans les portières complètent la fixation du parasol.

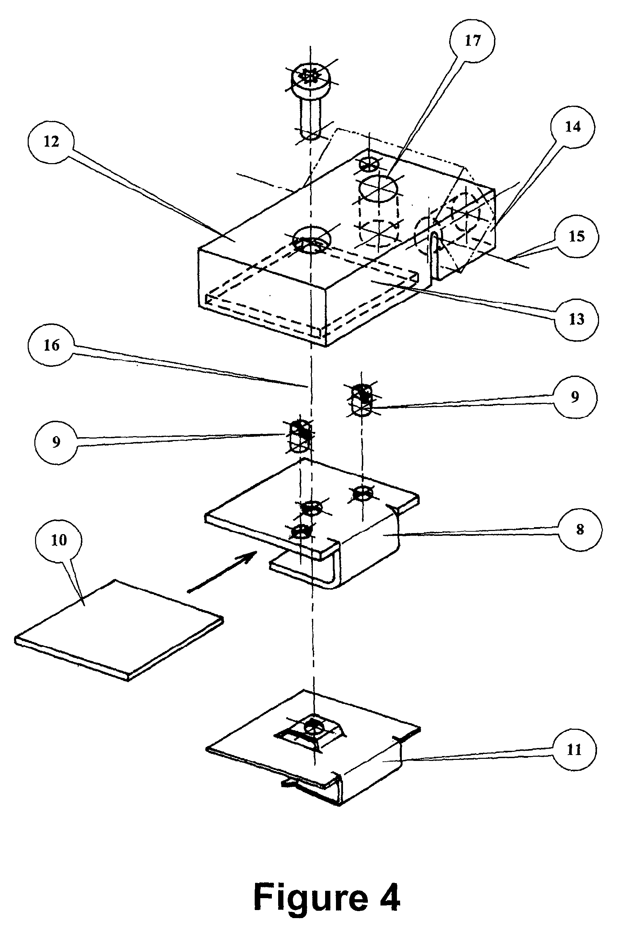

La figure 4 représente un point d'attache (5) composé soit d'une pièce inférieure en forme de C (8) équipé d'au moins une vis de pression (9) qui appuie sur une plaquette rigide (10) venant s'intercaler à l'intérieur du C entre la vis de pression (9) et la carrosserie, soit d'une pièce inférieure en forme de C de type "clip" (11) dont l'élasticité permet sa fixation au véhicule sans avoir recours à une vis de pression, et d'une pièce supérieure (12) d'un aspect esthétique venant se fixer sur l'une ou l'autre des pièces inférieures en forme de C (8) ou (11) ; Les fonctions principales de recevoir l'extrémité de l'un des arceaux flexibles dans un logement (17) prévu à cet effet et de permettre l'accrochage d'au moins un lien tendeur de toile (6), sont prévues dans la conception de la pièce supérieure (12) qui tient aussi compte des multiples possibilités de montage afin qu'elle corresponde au plus grand nombre d'adaptations en fonction de la configuration des différents types de véhicules ; Pour permettre cela, la pièce supérieure (12) est constituée d'une première partie (13) permettant sa fixation en plusieurs positions angulaires autour d'un axe (16) sur l'une ou l'autre des pièces inférieures en forme de C (8) ou (11) et d'une seconde partie (14) rendue articulée autour d'un axe (15) par rapport à la première partie (13) perpendiculairement à l'axe (16) des diverses positions angulaires de sa fixation sur l'une ou l'autre des pièces inférieures en forme de C (8) ou (11) ; Cette seconde partie (14) reçoit d'une part, au moins un, mais de préférence deux logements (17) réalisés sensiblement perpendiculaires l'un par rapport à l'autre de sorte que leurs axes sensiblement perpendiculaires à l'articulation des deux parties puissent offrir le plus grand nombre de positions angulaires et permettent d'y recevoir l'extrémité de l'un des arceaux flexibles composant les supports amovibles (1) quelle que soit l'orientation dudit point d'attache par rapport à celle de l'arceau flexible correspondant ; Cette seconde partie (14) reçoit d'autre part, au moins un trou et/ou un crochet permettant l'accrochage d'un lien tendeur de toile (6) quelle que soit l'orientation dudit point d'attache par rapport à l'axe du lien tendeur de toile correspondant.

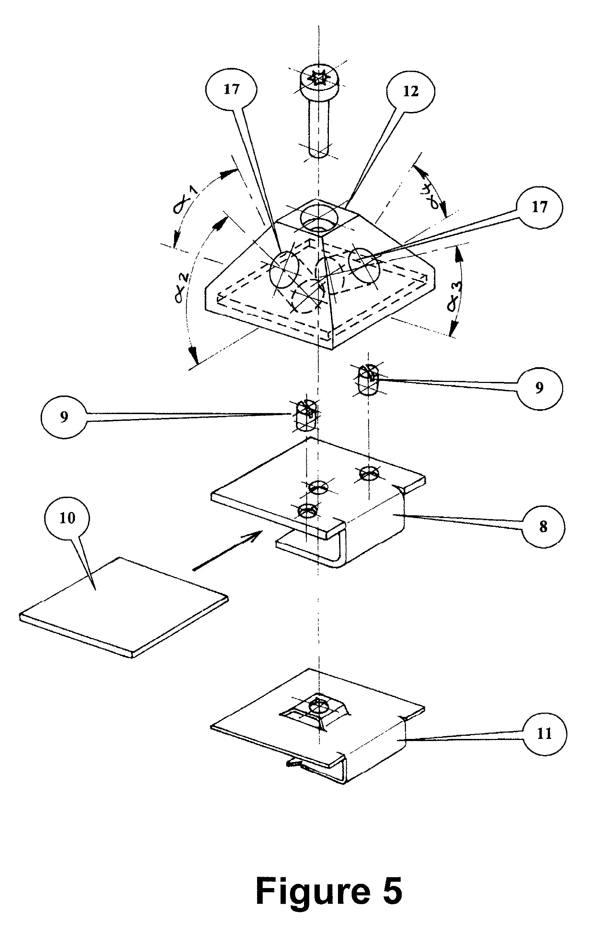

La figure 5 représente un point d'attache (5) selon un autre mode de réalisation composé soit d'une pièce inférieure en forme de C (8) équipé d'au moins une vis de pression (9) qui appuie sur une plaquette rigide (10) venant s'intercaler à l'intérieur du C entre la vis de pression (9) et la carrosserie, soit d'une pièce inférieure en forme de C de type "clip" (11) dont l'élasticité permet sa fixation au véhicule sans avoir recours à une vis de pression, et d'une pièce supérieure (12) d'un aspect esthétique ayant la possibilité de se fixer en plusieurs positions différentes sur l'une ou l'autre des pièces inférieures en forme de C (8) ou (11) ; Les fonctions principales de recevoir l'extrémité de l'un des arceaux flexibles composant les supports amovibles (1) dans un logement (17) prévu à cet effet et de permettre l'accrochage d'au moins un lien tendeur de toile (6) sont prévues dans la conception de cette pièce supérieure (12) qui tient aussi compte des multiples possibilités de montage afin qu'elle corresponde au plus grand nombre d'adaptations en fonction de la configuration des différents types de véhicules ; Pour permettre cela, la pièce supérieure (12) constituée d'une seule partie, possède des logements (17) réalisés sensiblement décalé l'un par rapport à l'autre, de sorte que leurs axes puissent offrir le plus grand nombre de positions angulaires (α) et permettent d'y recevoir l'extrémité de l'un des arceaux flexibles composant les supports amovibles (1) quelle que soit l'orientation dudit point d'attache (5) par rapport à celle de l'arceau flexible correspondant ; Cette pièce supérieure (12) reçoit d'autre part, au moins un trou et/ou un crochet permettant l'accrochage d'un lien tendeur de toile (6) quelle que soit l'orientation dudit point d'attache par rapport à l'axe du lien tendeur de toile correspondant.

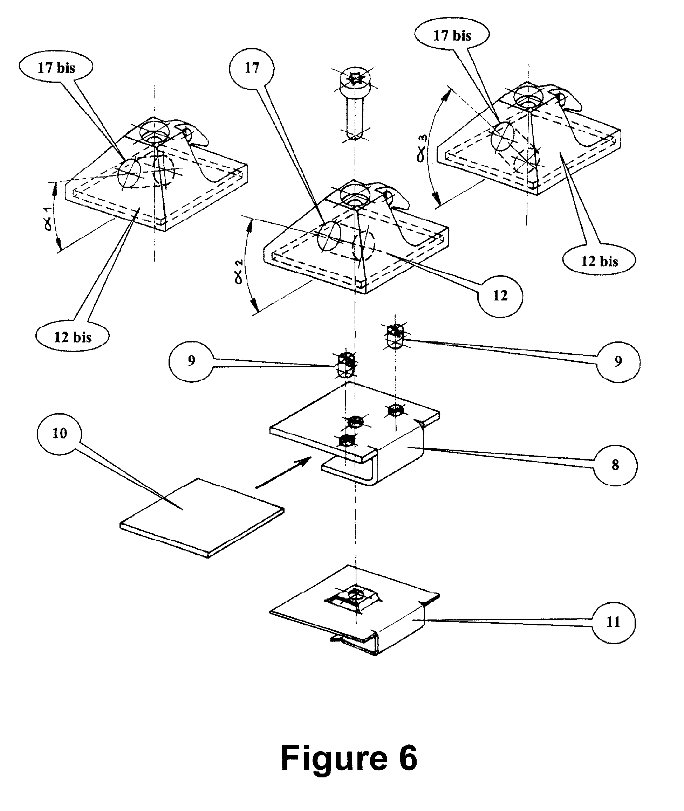

La figure 6 représente un point d'attache (5) selon un autre mode de réalisation composé soit d'une pièce inférieure en forme de C (8) équipé d'au moins une vis de pression (9) qui appuie sur une plaquette rigide (10) venant s'intercaler à l'intérieur du C entre la vis de pression (9) et la carrosserie, soit d'une pièce inférieure en forme de C de type "clip" (11) dont l'élasticité permet sa fixation au véhicule sans avoir recours à une vis de pression, et d'une pièce supérieure (12) constituée d'une seule partie d'aspect esthétique, ayant la possibilité de se fixer en plusieurs positions différentes sur l'une ou l'autre des pièces inférieures en forme de C (8) ou (11) ; Les fonctions principales de recevoir l'extrémité de l'un des arceaux flexibles dans un logement (17) prévu à cet effet et de permettre l'accrochage d'au moins un lien tendeur de toile (6) sont prévues dans la conception de cette pièce supérieure (12) qui pour tenir compte des multiples possibilités de montage afin qu'elle corresponde au plus grand nombre d'adaptations en fonction de la configuration des différents types de véhicules, est interchangeable par une autre pièce supérieure (12 bis) constituée, elle aussi, d'une seule partie permettant sa fixation en plusieurs positions angulaires sur l'une ou l'autre des pièces en forme de C (8) ou (11) et possédant un logement (17 bis) réalisé sensiblement décalé par rapport à celui (17) de la pièce supérieure (12) qu'elle remplace, de sorte que leurs axes d'orientation puissent offrir une position angulaire (α) différente pour recevoir l'extrémité de l'un des arceaux flexibles composant les supports amovibles (1) ; Positions angulaires aussi nombreuses que le jeu contiendra de pièces supérieures différentes permettant ainsi, l'orientation dudit point d'attache par rapport à celle de l'arceau flexible correspondant ; Chacune de ces pièces supérieures reçoit d'autre part, au moins un trou et/ou un crochet permettant l'accrochage d'un lien tendeur de toile (6) quelle que soit l'orientation dudit point d'attache par rapport à l'axe du lien tendeur de toile correspondant.

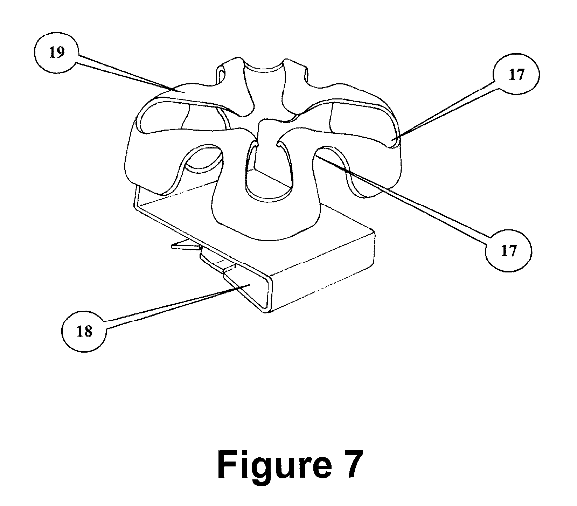

La figure 7 représente un point d'attache (5) selon un mode de réalisation préférentiel composé d'une seule pièce de type "clip" dont l'élasticité de la partie inférieure en forme de C (18) permet sa fixation au véhicule sans avoir recours à une vis de pression, et dont la partie supérieure en forme préférentielle de dôme (19) possède des logements (17) réalisés sensiblement décalés de façon angulaire l'un par rapport à l'autre, de sorte que leurs axes puissent offrir plusieurs positions angulaires et permettent d'y recevoir l'extrémité de l'un des arceaux flexibles composant les supports amovibles (1) quelle que soit l'orientation dudit point d'attache par rapport à celle de l'arceau flexible correspondant ; L'accrochage d'un lien tendeur de toile (6) dans un de ces logements est aussi possible quelle que soit l'orientation dudit point d'attache par rapport à l'axe du lien tendeur de toile correspondant.

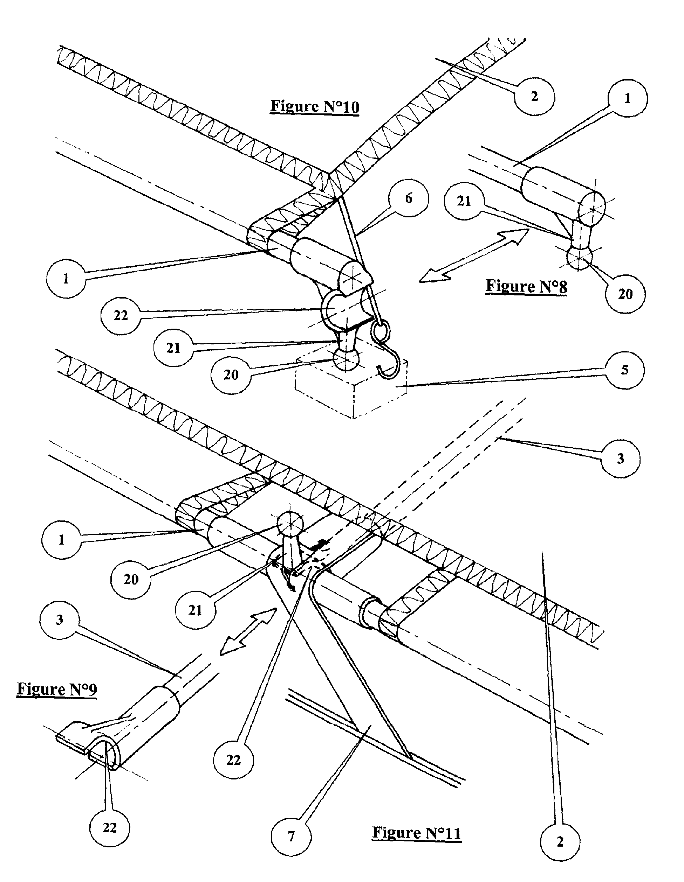

La figure 8 représente une extrémité d'arceau flexible composant les supports amovibles (1) qui possède une partie fonctionnelle de forme sphérique (20) dont l'axe confondu avec celui d'une partie cylindrique et/ou conique (21) est sensiblement perpendiculaire à l'axe longitudinal du dit arceau flexible, destinée à s'encastrer dans un des logements (17) situés en partie supérieure d'un des points d'attache (5).

La figure 9 représente une extrémité d'arceau transversal (3) qui possède une partie fonctionnelle en forme de fourche semi-circulaire (22) dont l'axe est sensiblement perpendiculaire à l'axe longitudinal dudit arceau transversal (3), destinée à s'encastrer par chevauchement sur l'un des deux arceaux flexibles composant les supports amovibles (1).

Les figures 10 et 11, selon un mode de réalisation préférentiel, représentent chacune des extrémités, d'une part des différents arceaux flexibles constituant les supports amovibles (1) et d'autre part de l'arceau transversal (3), possédant à l'identique une partie fonctionnelle de forme sphérique (20) destinée à s'encastrer dans un des logements (17) situés en partie supérieure d'un des points d'attache (5) et une partie fonctionnelle en forme de fourche semi-circulaire (22) destinée à s'encastrer par chevauchement sur l'un des deux arceaux flexibles composant les supports amovibles (1) ; L'axe de ladite partie fonctionnelle de forme sphérique (20) confondu avec celui d'une partie cylindrique et/ou conique (21) et l'axe de ladite partie fonctionnelle en forme de fourche semi-circulaire (22) sont sensiblement perpendiculaires à l'axe longitudinal dudit arceau dont ces parties fonctionnelles forment l'extrémité.

## Revendications

1. Parasol, pour véhicule, du type comportant une toile (2), une armature composée d'au moins deux supports amovibles (1) destinés à maintenir la dite toile (2) à distance au dessus de la carrosserie dudit véhicule et des points d'attaches (5) permettant de relier ledit parasol audit véhicule, **caractérisé en ce que** chacun desdits points d'attache (5) comporte des moyens de pincements (8, 11, 18) permettant sa fixation sur ladite carrosserie et au moins un logement (17) destiné à recevoir, par encastrement, l'extrémité d'au moins d'un desdits support amovibles (1).

2. Parasol selon R1, **caractérisé en ce qu'**il comporte des liens tendeurs (6) et **en ce que** lesdits points d'attache (5) comportent des éléments d'accrochage permettant d'accrocher lesdits liens tendeurs (6) audits points d'attache (5).

3. Parasol selon la revendication 1 ou 2, **caractérisé en ce que** ladite armature comporte deux arceaux (1) montés sensiblement parallèle entre eux et par rapport à l'axe longitudinal dudit véhicule.

4. Parasol selon la revendication 3 **caractérisé en ce que** lesdits arceaux sont flexibles et sont maintenus écartés l'un de l'autre, sensiblement en leur milieu, par un troisième arceau (3) transversal à l'axe dudit véhicule et dont chacune des extrémités est fixée sur l'un desdits arceaux flexibles (1).

5. Parasol selon la revendication 1 ou 2, **caractérisé en ce que** les supports amovibles (1) sont constitués de deux arceaux flexibles montés en croix par rapport à l'axe longitudinal du véhicule.

6. Parasol selon la revendication 1 ou 2, **caractérisé en ce que** les supports amovibles sont deux barres rigides permettant la tension de la toile et montés sensiblement parallèles entre eux et sensiblement perpendiculaire par rapport à l'axe longitudinal du véhicule et sont maintenus surélevés de ladite carrosserie par des supports intercalaires (4).

7. Parasol selon la revendication 1 **caractérisé en ce qu'**il comporte des liens latéraux (7) solidaires à une extrémité de l'ensemble toile armature, lesdits liens latéraux étant destinés à être coincés dans les portières du véhicule pour compléter la fixation du parasol.

8. Parasol selon l'une quelconque des revendications 1 à 7 **caractérisé en ce que** chacun des points d'attache (5) est composé d'une pièce en forme de C (11) équipée d'au moins une vis de pression (9) venant s'appuyer sur une plaquette (10) venant s'intercaler à l'intérieur de ladite pièce en forme de C (11) entre ladite vis de pression (9) et la carrosserie.

9. Parasol selon l'une quelconque des revendications 1 à 7 **caractérisé en ce que** chacun des points d'attache (5) est composé d'une pièce élastique en forme de C (11) dont l'élasticité permet de coincer un élément de la carrosserie entre les deux branches de ladite pièce élastique en forme de C (11).

10. Parasol selon l'une quelconque des revendications 8 ou 9, **caractérisé en ce que** ledit point d'attache comporte en outre une pièce (12) munie de moyens permettant sa fixation à ladite pièce en forme de C, ladite pièce (12) comportant ledit logement (17).

11. Parasol selon la revendication 10 **caractérisé en ce que** ladite pièce (12) comporte une pluralité de logements (17) cylindriques dont les axes centraux font des angles différents par rapport à ladite pièce en forme de C (8), et comporte en outre des moyens permettant de la monter à rotation par rapport à ladite pièce en forme de C (8).
